# EUROPEAN PATENT APPLICATION

(11) **EP 4 769 323 A1**
(43) Date of publication of application: **01.07.2026**
(21) Application number: 25222700.4
(22) Date of filing: 11.12.2025
(51) Int. Cl.: G06T 19/00, G06V 20/20

(54) **CONTEXT-BASED IMAGE EDITING USING ARTIFICIAL INTELLIGENCE AND AUTOMATIC APPLICATION OF PERSONALIZED VISUAL PHOTO PREFERENCES**

(30) Priority: 26.12.2024 US 202463738957 P; 05.12.2025 US 202519411050
(71) Applicant: Meta Platforms, Inc., Menlo Park, CA 94025 (US)
(72) Inventor: Dunn, Lachlan, Menlo Park (US)
(74) Representative: Murgitroyd & Company

(57) **Abstract**

A method for context-based insertion of a three-dimensional (3D) object into a photograph includes analyzing, by a machine-learning model, a scene of the photograph to determine contextual attributes of the scene. The method also includes selecting, based on the contextual attributes, a 3D asset from a set of 3D assets. The method further includes posing the 3D asset using geometric information determined from the scene such that the posed 3D asset conforms to one or more of perspective, orientation, or surface geometry of the photograph. The method also includes adding a 3D element contextually associated with the scene, the 3D element being selected and positioned in accordance with the contextual attributes. The method further includes generating an output photograph that comprises the posed 3D asset and the 3D elements integrated into the photograph.

## Description

### TECHNOLOGICAL FIELD

Examples of this disclosure relate generally to methods, apparatuses, or computer programs for inserting and posing objects into images.

### BACKGROUND

Digital imaging technologies enable users to capture, store, and manipulate photographs using a variety of computing devices such as smartphones, tablets, wearable devices, and desktop systems. Modern devices may include integrated cameras, sensors, and processing components that support image capture and post-capture editing. Software applications may further allow users to apply effects, filters, adjustments, or other visual modifications to images.

Advances in computer graphics and augmented reality have additionally enabled the representation of virtual or three-dimensional (3D) objects within digital images. These systems may include libraries of 3D assets, rendering techniques for placing such assets within an image, and tools for adjusting the appearance of virtual objects relative to the visual characteristics of a photograph.

Artificial intelligence and machine learning techniques have also been applied in the field of digital imaging. Al models may analyze visual content, identify people or objects, determine stylistic attributes, or modify selected portions of an image. Such models may operate on-device or using remote computing resources and may draw on training data to recognize patterns or visual characteristics.

Platforms (e.g., social networking platforms) and distributed computing environments further allow images to be shared across multiple devices and accounts. Users may appear in images captured by a variety of systems, and digital photographs may be stored, transmitted, and/or displayed across networks that interconnect different devices and services.

### SUMMARY

A tool for inserting and posing 3D objects into a photograph may incorporate a machine learning model that may analyze and understand the context of the scene of a photograph. The machine learning model may then select a relevant 3D object from a library and insert the object into the scene in a way that fits into the scene. Additional elements may be added into the scene to enhance the realism or depth of integration of the object into the scene.

Methods, systems, and apparatuses with regard to inserting 3D objects into photos are disclosed herein. A method, system, and/or apparatus may be provided for identifying the context of the scene of a photograph; inserting a 3D object into the photograph; and integrating the object into the scene of the photograph.

According to a first aspect, there is provided a method for context-based insertion of a three-dimensional, 3D, object into a photograph, comprising: analyzing, by a machine-learning model, a scene of the photograph to determine contextual attributes of the scene; selecting, based on the contextual attributes, a 3D asset from a set of 3D assets; posing the 3D asset using geometric information determined from the scene such that the posed 3D asset conforms to one or more of perspective, orientation, or surface geometry of the photograph; adding a 3D element contextually associated with the scene, the 3D element being selected and positioned in accordance with the contextual attributes; and generating an output photograph that comprises the posed 3D asset and the 3D elements integrated into the photograph.

The contextual attributes may comprise one or more of an environment type, a spatial layout, depth cues, object boundaries, and lighting characteristics.

The method may further comprise occluding a portion of the posed 3D model using segmentation masks or depth-ordering information determined from the scene, such that a real-world object in the photograph visually appears in front of the posed 3D model.

The method may further comprise: determining one or more visual preferences of a first user in accordance with images depicting the user in a set of photographs associated with a first account of the first user; identifying an image of the first user in the output photograph, the output photograph being associated with a second account of a second user; and editing the image of the first user in the output photograph to conform to the one or more visual preferences.

Editing the image of the user may comprise applying a generative in-painting technique to modify one or more of smoothing, tone, eye color, or lighting characteristics while preserving surrounding image content.

Analyzing the scene may comprise generating a segmentation map of the photograph using a segmentation model to delineate object boundaries, foreground regions, or background regions.

Selecting the 3D asset may comprise selecting an environment-specific variant of the 3D asset based on the contextual attributes.

Posing the 3D asset may comprise performing a geometric transformation based on an inferred camera angle associated with the photograph.

The 3D asset may comprise one or more of a virtual character, an avatar, an animated figure, a synthetic entity, or a 3D mesh.

According to a second aspect, there is provided an apparatus for context-based insertion of a three-dimensional, 3D, object into a photograph, comprising: one or more processors; and one or more memories coupled with the one or more processors and storing processor-executable code that, when executed by the one or more processors, is configured to cause the apparatus to carry out the method of the first aspect.

According to a third aspect, there is provided a computer-readable medium having program code recorded thereon for context-based insertion of a three-dimensional, 3D, object into a photograph, the program code when executed by one or more processors cause the one or more processors to carry out the method of the first aspect. The medium may be non-transitory.

According to a fourth aspect, there is provided a computer program product comprising instructions for context-based insertion of a three-dimensional, 3D, object into a photograph, the instructions when executed by one or more processors cause the one or more processors to carry out the method of the first aspect.

Other aspects of the present disclosure are directed to an apparatus that includes one or more processors and one or more memories coupled to the one or more processors. The memory stores processor-executable code that, when executed by the one or more processors, causes the apparatus to analyze, using a machine-learning model, a scene of a photograph to determine contextual attributes of the scene. Execution of the processor-executable code further causes the apparatus to select, based on the contextual attributes, a 3D asset from a set of 3D assets and pose the 3D asset using geometric information determined from the scene to conform to one or more of perspective, orientation, or surface geometry of the photograph. Execution of the processor-executable code also causes the device to add a 3D element that is contextually associated with the scene and position the 3D element in accordance with the contextual attributes. The device then generates an output photograph comprising the posed 3D asset and the integrated 3D elements.

The exemplary aspects of the present disclosure may provide artificial intelligence (AI) and/or machine learning (ML) models to facilitate editing a user's/party's photographs/images may allow for preferred visual photograph/image settings to be automatically applied to any photograph/image taken of an original user/party by other users (e.g., third parties). The Al and/or ML models may allow a user/party to select preferred photographs or photograph characteristics and automatically apply edits conforming to those characteristics to photos of the party taken by other users (e.g., third parties). The Al models and/or ML models may enable the edits to be made to photos/images taken by other users (e.g., third parties) belonging to the original user's/party's network of contacts and/or to photos taken by third parties outside of the original party's network.

Methods, systems, and apparatuses with regard to applying personalized visual preferences to photographs are disclosed herein. A method, system, and apparatus may be provided to determine preferred photograph/image attributes, sharing the photograph/image preferences, and editing photographs to conform to the specified preferences.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The summary, as well as the following detailed description, is further understood when read in conjunction with the appended drawings. For the purpose of illustrating the disclosed subject matter, there are shown in the drawings examples of the disclosed subject matter; however, the disclosed subject matter is not limited to the specific methods, compositions, and devices disclosed. In addition, the drawings are not necessarily drawn to scale. In the drawings:
FIG. 1 is a diagram of an exemplary network environment in accordance with an example of the present disclosure.
FIG. 2 is a diagram of an exemplary communication device in accordance with an example of the present disclosure.
FIG. 3 is a diagram of an exemplary computing system in accordance with an example of the present disclosure.
FIG. 4 illustrates an example of an artificial reality system comprising a headset, in accordance with an example of the present disclosure.
FIG. 5 illustrates a flow diagram of a process for context-based insertion of one or more three-dimensional (3D) objects into an image, in accordance with various aspects of the present disclosure.
FIG. 6 illustrates an example system for context-based insertion of one or more 3D objects into an image, in accordance with various aspects of the present disclosure.
FIG. 7 illustrates an example of a machine learning framework including machine learning model(s) and a training database, in accordance with one or more examples of the present disclosure.
FIG. 8 illustrates an example of a process for applying personalized visual preferences to photographs across a network of devices and accounts, in accordance with various aspects of the present disclosure.
FIG. 9 illustrates an example of applying personalized visual preferences to photographs on a device or across a network of devices and accounts, in accordance with various aspects of the present disclosure.
FIG. 10 is a flow diagram of a process for processing a photograph using artificial-intelligence techniques to insert a contextually appropriate three-dimensional object and apply personalized visual preferences.

The figures depict various examples for purposes of illustration only. One skilled in the art will readily recognize from the following discussion that alternative examples of the structures and methods illustrated herein may be employed without departing from the principles described herein.

### DETAILED DESCRIPTION

Some examples of the present invention will now be described more fully hereinafter with reference to the accompanying drawings, in which some, but not all examples of the invention are shown. Various examples of the invention may be embodied in many different forms and should not be construed as limited to the examples set forth herein. Like reference numerals refer to like elements throughout.

It is to be understood that the methods and systems described herein are not limited to specific methods, specific components, or particular implementations. It is also to be understood that the terminology used herein is for the purpose of describing particular examples only and is not intended to be limiting.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, computer readable medium or any suitable combination of two or more of these, where appropriate. A computer-readable non-transitory storage medium may be volatile, non-volatile, or a combination of volatile and non-volatile, where appropriate.

As defined herein, a "computer-readable storage medium," which refers to a non-transitory, physical or tangible storage medium (e.g., volatile or non-volatile memory device), may be differentiated from a "computer-readable transmission medium," which refers to an electromagnetic signal.

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional (3D) virtual worlds, online games (e.g., video games), one or more content items such as, for example, images, videos, non-fungible tokens (NFTs) and in which the content items may, for example, be purchased with digital currencies (e.g., cryptocurrencies) and other suitable currencies. In some examples, a Metaverse or Metaverse network may enable the generation and provision of immersive virtual spaces in which remote users may socialize, collaborate, learn, shop, and/or engage in various other activities within the virtual spaces, including through the use of Augmented/Virtual/Mixed Reality.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

Also, as used in the specification including the appended claims, the singular forms "a," "an," and "the" include the plural, and reference to a particular numerical value includes at least that particular value, unless the context clearly dictates otherwise. The term "plurality", as used herein, means more than one. When a range of values is expressed, another example includes from the one particular value or to the other particular value. Similarly, when values are expressed as approximations, by use of the antecedent "about," it will be understood that the particular value forms another example. All ranges are inclusive and combinable. It is to be understood that the terminology used herein is for the purpose of describing particular aspects only and is not intended to be limiting.

This written description uses examples to enable any person skilled in the art to practice the claimed subject matter, including making and using any devices or systems and performing any incorporated methods. Other variations of the examples are contemplated herein. It is to be appreciated that certain features of the disclosed subject matter which are, for clarity, described herein in the context of separate examples, may also be provided in combination in a single example. Conversely, various features of the disclosed subject matter that are, for brevity, described in the context of a single example, may also be provided separately or in any sub-combination. Further, any reference to values stated in ranges includes each and every value within that range. Any documents cited herein are incorporated herein by reference in their entireties for any and all purposes.

The scope of this disclosure encompasses all changes, substitutions, variations, alterations, and modifications to the examples described or illustrated herein that a person having ordinary skill in the art would comprehend. The scope of this disclosure is not limited to the examples described or illustrated herein. Moreover, although this disclosure describes and illustrates respective examples herein as including particular components, elements, feature, functions, operations, or steps, any of these examples may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular examples as providing particular advantages, particular examples may provide none, some, or all of these advantages.

In the present disclosure, "automatically" refers to operations performed by one or more computing devices, processors, machine-learning models, or software components without requiring human intervention to initiate, select parameters for, direct, or carry out the operation. Automatically performed operations may occur in response to input data, detection of conditions, execution of programmed instructions, or invocation of trained models, and may include the generation of outputs, determinations, analyses, transformations, or other processing performed by the system. Automatically does not require that the operation occur instantly or without user awareness, but rather that the operation is executed by the system itself rather than being manually performed by a human user.

Digital imaging technologies enable users to capture, store, and manipulate photographs using a variety of computing devices such as smartphones, tablets, wearable devices, and desktop systems. Some devices may include integrated cameras, sensors, and processing components that support image capture and post-capture editing. Software applications may further allow users to apply effects, filters, adjustments, or other visual modifications to images.

Conventional methods for inserting three-dimensional (3D) objects into images may require users to manually operate 3D modeling or rendering software to position, orient, and scale virtual objects within an existing photograph. Such workflows may involve adjusting multiple parameters, such as lighting, shadows, depth, and perspective, to make the inserted object appear coherent with the surrounding scene. These processes can be time-intensive and may require specialized expertise.

Other techniques rely on augmented reality tools that allow a user to place and pose a 3D object within a live camera view prior to taking a photograph. In these systems, the user typically manipulates the object in real time, using gestures or on-screen controls to position the object relative to detected surfaces. The resulting photo reflects the real-time placement of the virtual object at the moment of capture. However, because placement and posing may occur interactively and under time constraints, achieving a natural fit with the scene may depend heavily on manual adjustments, camera angle, and environmental conditions.

Both types of approaches may therefore involve substantial manual effort to achieve a realistic or contextually appropriate insertion of 3D content into a photograph. Users may need to repeatedly refine the placement, pose, or visual properties of the virtual object, and integrating the object with the real-world scene, including accounting for occlusion, spatial relationships, or environmental cues, can be complex without automated assistance.

Various aspects of the present disclosure are directed to techniques for analyzing a scene of an image and inserting one or more 3D objects into the image in a manner that reflects the context of the scene. In some examples, artificial intelligence systems and methods for advanced digital image processing may be used to insert and integrate a 3D object into an image based on an understanding of the image's visual context. As used herein, photograph or photographs refer to any visual media depicting one or more subjects, including but not limited to digital images, pictures, still frames, captured camera output, rendered images, screenshots, or any other form of static visual representation, regardless of file format, capture mechanism, or storage medium. A machine learning model, such as a multimodal artificial intelligence model paired with a segmentation model, may analyze the scene of the image to identify elements, including environment type, objects present, spatial layout, planes, surfaces, and depth cues. Using the contextual information derived from that analysis, the system may select a suitable 3D object or character from a curated library of augmented-reality assets and automatically pose the selected object so that it coherently fits within the scene. Additional 3D elements may be incorporated based on the inferred setting, and the inserted 3D model may be occluded with real-world items appearing in the image to improve visual integration and realism. The system may then generate an updated version of the image that includes the inserted 3D content blended with the original scene.

In some examples, a machine learning model may determine and apply personalized visual preferences associated with images of a user. The machine learning model may analyze one or more reference photographs of a user to determine the user's preferred visual attributes, such as smoothing, lighting adjustments, tone characteristics, or other aesthetic preferences. These preferences may alternatively be provided directly as user input. The preferences may then be shared across a network of devices and accounts associated with the user or with contacts of the user. When the system identifies the user's image in a photograph, whether on the user's own device, on another device within the network, or in an image uploaded to an online platform, the system may automatically edit the image of the user in the photograph to conform to the stored preferences. The edits may be applied to new photographs or to previously captured or uploaded photographs, producing an updated version of the image that reflects the user's preferred appearance.

Various aspects of the present disclosure may provide a number of technical advantages. For example, by analyzing the visual context of an image using one or more artificial intelligence models, the disclosed aspects may automatically determine environment type, scene layout, object boundaries, depth cues, and other contextual characteristics that may be used to guide the insertion of one or more 3D objects into the image. The system may select one or more 3D objects from a library of augmented-reality assets and pose the selected objects in accordance with the geometric and visual properties of the scene. In some examples, the system may incorporate additional 3D elements consistent with the identified context and may apply occlusion relative to real-world items in the image to improve visual coherence.

Because the scene analysis, object selection, object posing, and integration operations may be performed automatically using machine-based processing, the disclosed techniques may reduce the manual effort associated with conventional 3D compositing workflows. In certain exemplary aspects, the disclosed techniques may also facilitate consistent generation of integrated images across large collections/sets of photographs, across heterogeneous devices, and/or across different environments, thereby enabling scalable and repeatable image-processing operations.

The operations described herein involve computational analyses, processor analyses and transformations that are not feasibly performed by a human user without the assistance of specialized computing systems. The disclosed techniques may determine scene context, object segmentation, depth ordering, spatial layout, and/or other environmental attributes based on pixel-level and feature-level information extracted from an image(s), using machine-learning models trained on large datasets. These forms of analysis require accuracy, granularity, and processing speed that a human is unable to reasonably achieve. The system may further evaluate the characteristics of the scene and compare those characteristics with stored models and/or asset metadata to identify a contextually appropriate 3D object or variation, a process that involves multidimensional feature matching and inference beyond the practical capabilities of manual decision-making. In addition, the system may compute/determine a pose for a 3D object based on inferred camera angle, perspective, surface orientation, lighting cues, and spatial relationships, applying geometric transformations, optimization routines, and rendering adjustments that are unable to be manually executed with comparable precision or efficiency. The disclosed techniques may also determine pixel-level occlusion and blending between the inserted 3D object and real-world elements in the image, using segmentation masks, depth estimations, and pixel-wise adjustments that are not realistically reproducible through manual editing. Moreover, these operations may be performed automatically across large sets of images and/or across multiple devices, enabling scalability, uniformity, and repeatability that a human user is unable to feasibly replicate. Accordingly, although certain aspects of image editing may be performed manually in limited contexts, the computational processes described herein are unable to be carried out by a human in the same manner or with comparable performance.

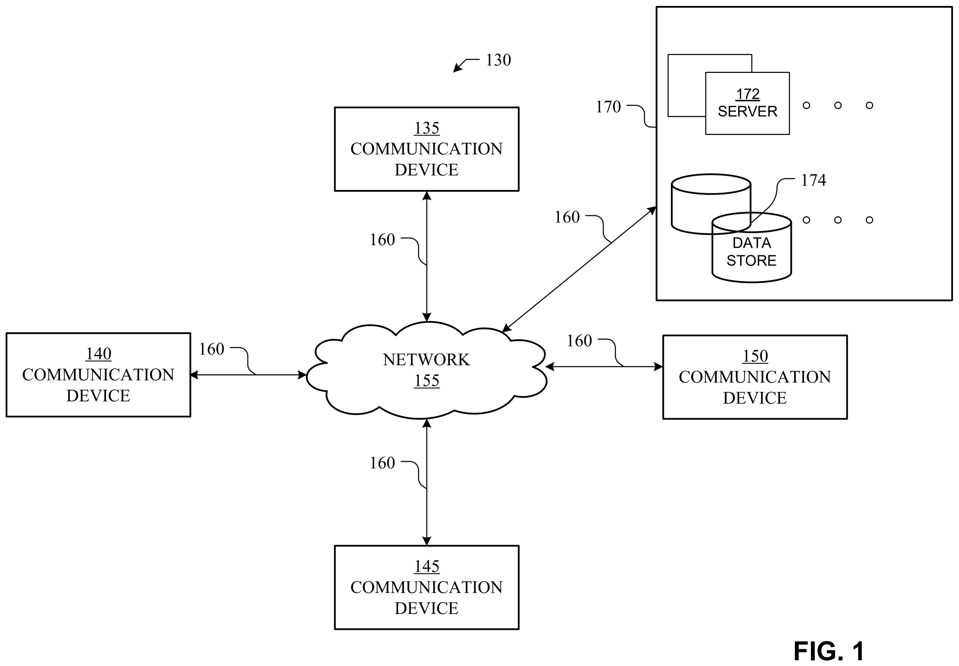

Reference is now made to FIG. 1, which is a block diagram of a system according to examples. As shown in FIG. 1, the system 130 may include one or more communication devices 135, 140, 145, and 150 and a network device 170. Additionally, the system 130 may include any suitable network, such as, for example, network 155. In some examples, the network 155 may be a Metaverse network. In some examples, the network 155 may be any suitable network capable of provisioning content and/or facilitating communications among entities within, or associated with the network. As an example and not by way of limitation, one or more portions of network 155 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 155 may include one or more networks 155.

Links 160 may connect the communication devices 135, 140, 145, and 150 to network 155, network device 170, and/or to each other. This disclosure contemplates any suitable links 160. In some examples, one or more links 160 may include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In some examples, one or more links 160 may each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 160, or a combination of two or more such links 160. Links 160 need not necessarily be the same throughout system 130. One or more first links 160 may differ in one or more respects from one or more second links 160.

Links 160 may connect the communication devices 135, 140, 145, and 150 to network 155, network device 170, and/or to each other. This disclosure contemplates any suitable links 160. In some examples, one or more links 160 may include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In some examples, one or more links 160 may each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 160, or a combination of two or more such links 160. Links 160 need not necessarily be the same throughout system 130. One or more first links 160 may differ in one or more respects from one or more second links 160.

Network device 170 may be accessed by the other components of system 130 either directly or via network 155. As an example and not by way of limitation, communication devices 135, 140, 145, 150 may access network device 170 using a web browser or a native application associated with network device 170 (e.g., a mobile social-networking application, a messaging application, another suitable application, or any combination thereof) either directly or via network 155. In particular examples, network device 170 may include one or more servers 172. Each server 172 may be a unitary server or a distributed server spanning multiple computers or multiple datacenters. Servers 172 may be of various types, such as, for example and without limitation, web server, news server, mail server, message server, advertising server, file server, application server, exchange server, database server, proxy server, another server suitable for performing functions or processes described herein, or any combination thereof. In particular examples, each server 172 may include hardware, software, or embedded logic components or a combination of two or more such components for carrying out the appropriate functionalities implemented and/or supported by server 172. In particular examples, network device 170 may include one or more data stores 174. Data stores 174 may be used to store various types of information. In particular examples, the information stored in data stores 174 may be organized according to specific data structures. In particular examples, each data store 174 may be a relational, columnar, correlation, or other suitable database. Although this disclosure describes or illustrates particular types of databases, this disclosure contemplates any suitable types of databases. Particular examples may provide interfaces that enable communication devices 135, 140, 145, 150, and/or another system (e.g., a third-party system) to manage, retrieve, modify, add, or delete, the information stored in data store 174.

Network device 170 may provide users of the system 130 the ability to communicate and interact with other users. In particular examples, network device 170 may provide users with the ability to take actions on various types of items or objects, supported by network device 170. In particular examples, network device 170 may be capable of linking a variety of entities. As an example and not by way of limitation, network device 170 may enable users to interact with each other as well as receive content from other systems (e.g., third-party systems) or other entities, or to allow users to interact with these entities through an application programming interface (API) or other communication channels.

It should be pointed out that although FIG. 1 shows one network device 170 and four communication devices 135, 140, 145, and 150, any suitable number of network devices 170 and communication devices 135, 140, 145, and 150 may be part of the system of FIG. 1 without departing from the scope of the present disclosure.

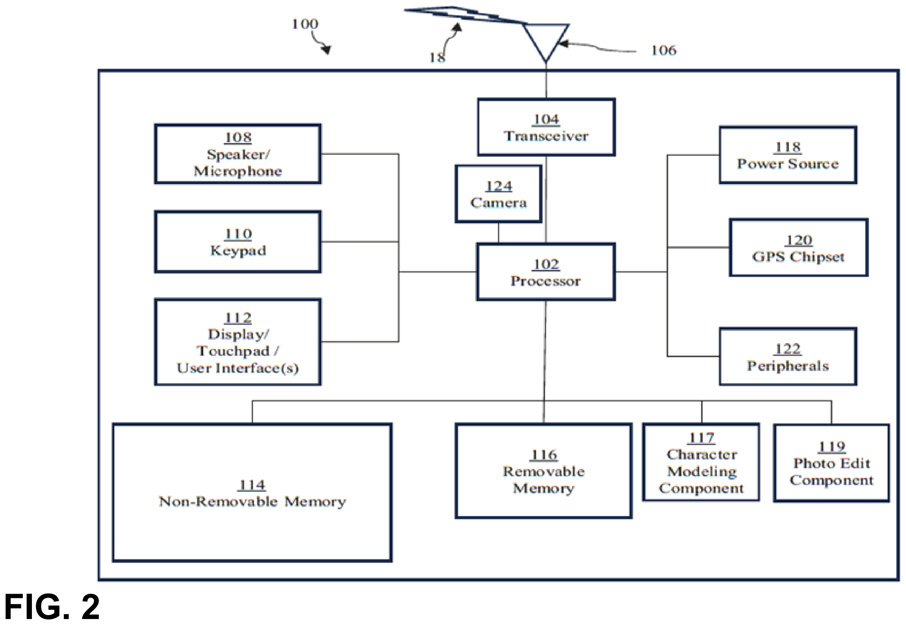

FIG. 2 illustrates a block diagram of an exemplary hardware/software architecture of a communication device, such as, for example, user equipment (UE) 100. In some exemplary aspects, the UE 100 may be any of the communication devices 135, 140, 145, 150. In some exemplary aspects, the UE 100 may be a computer system such as for example a desktop computer, notebook or laptop computer, netbook, a tablet computer (e.g., a smart tablet), e-book reader, GPS device, camera, personal digital assistant, handheld electronic device, cellular telephone, smartphone, smart glasses, augmented/virtual reality device, a head-mounted display/device (e.g., a headset), smart watch, charging case, or any other suitable electronic device. As shown in FIG. 2, the UE 100 (also referred to herein as node 100) may include a processor 102, non-removable memory 114, removable memory 116, a speaker/microphone 108, a keypad 110, a display, touchpad, and/or user interface(s) 112, a power source 118, a global positioning system (GPS) chipset 120, and other peripherals 122. In some exemplary aspects, the display, touchpad, and/or user interface(s) 112 may be referred to herein as display/touchpad/user interface(s) 112. The display/touchpad/user interface(s) 112 may include a user interface capable of presenting one or more content items and/or capturing input of one or more user interactions/actions associated with the user interface. The power source 118 may be capable of receiving electric power for supplying electric power to the UE 100. For example, the power source 118 may include an alternating current to direct current (AC-to-DC) converter, allowing the power source 118 to be connected/plugged to an AC electrical receptacle and/or Universal Serial Bus (USB) port for receiving electric power. The UE 100 may also include a camera 124. In an example, the camera 124 may be a smart camera configured to sense images/video appearing within one or more bounding boxes. The UE 100 may also include communication circuitry, such as a transceiver 104 and a transmit/receive element 106. It will be appreciated that the UE 100 may include any sub-combination of the foregoing elements while remaining consistent with an example.

The processor 102 is coupled to its communication circuitry (e.g., transceiver 104 and transmit/receive element 106). The processor 102, through the execution of computer executable instructions, may control the communication circuitry in order to cause the node 100 to communicate with other nodes via the network to which it is connected.

The transmit/receive element 106 may be configured to transmit signals to, or receive signals from, other nodes or networking equipment. For example, the transmit/receive element 106 may be an antenna configured to transmit and/or receive radio frequency (RF) signals. The transmit/receive element 106 may support various networks and air interfaces, such as wireless local area network (WLAN), wireless personal area network (WPAN), cellular, and the like. In yet another example, the transmit/receive element 106 may be configured to transmit and/or receive both RF and light signals. It will be appreciated that the transmit/receive element 106 may be configured to transmit and/or receive any combination of wireless or wired signals.

The transceiver 104 may be configured to modulate the signals that are to be transmitted by the transmit/receive element 106 and to demodulate the signals that are received by the transmit/receive element 106. As noted above, the node 100 may have multi-mode capabilities. Thus, the transceiver 104 may include multiple transceivers for enabling the node 100 to communicate via multiple radio access technologies (RATs), such as universal terrestrial radio access (UTRA) and Institute of Electrical and Electronics Engineers (IEEE 802.11), for example.

The processor 102 may access information from, and store data in, any type of suitable memory, such as the non-removable memory 114 and/or the removable memory 116. For example, the processor 102 may store session context in its memory, (e.g., non-removable memory 114 and/or removable memory 116) as described above. The non-removable memory 114 may include RAM, ROM, a hard disk, or any other type of memory storage device. The removable memory 116 may include a subscriber identity module (SIM) card, a memory stick, a secure digital (SD) memory card, and the like. In other examples, the processor 102 may access information from, and store data in, memory that is not physically located on the node 100, such as on a server or a home computer.

The processor 102 may receive power from the power source 118, and may be configured to distribute and/or control the power to the other components in the node 100. The power source 118 may be any suitable device for powering the node 100. For example, the power source 118 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like. The processor 102 may also be coupled to the GPS chipset 120, which may be configured to provide location information (e.g., longitude and latitude) regarding the current location of the node 100. It will be appreciated that the node 100 may acquire location information by way of any suitable location-determination method while remaining consistent with an example.

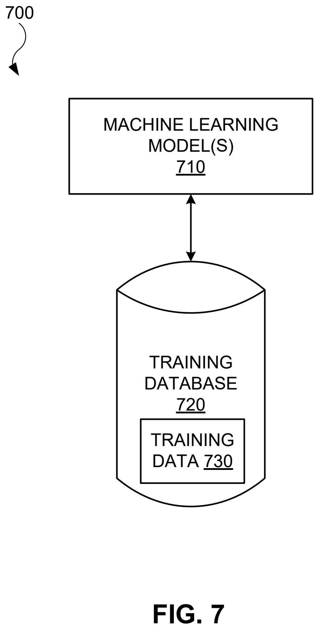

The UE 100 may further include a character modeling component 117 that may implement a machine learning model (e.g., machine learning model 710 of FIG. 7) to analyze a photo taken by a device (e.g., UE 100) using a camera (e.g., camera 124) to understand the context of the scene of the image and insert a contextually appropriate 3-dimensional (3D) model into the photo. In some examples, the character modeling component 117 may implement a machine learning model (e.g., machine learning model(s) 710 of FIG. 7) and/or an artificial intelligence (AI) model that may be pre-trained, trained in real-time, and/or periodically trained with training data (e.g., training data 730 of FIG. 7) to enable the insertion and posing of contextually appropriate 3D model(s) into photo(s) taken by a device based in part on analyzing or understanding the context of the scene(s) of the photo(s). The machine learning model (e.g., machine learning model(s) 710 of FIG. 7) may further be enabled to occlude the inserted 3D model(s) with real-world objects in the photo. UE 100 may then generate an output photo 254 that includes the inserted 3D model and additional 3D elements.

In some examples, the character modeling component 117 may further include a multimodal artificial intelligence (MMAI) model configured to identify the context of the scene of the photo, detect the terrain (e.g., planes, flat surfaces), or detect objects within the scene. In some examples, the character modeling component 117 may further include a segment anything model (SAM) configured to delineate various elements in the photo. In some examples, the photo may be sent via a network (e.g., network 155) to another device (e.g., UE 100) containing a character modeling component (e.g., character modeling component 117, character modeling component 313, or character modeling component 407) for analysis or insertion of 3D models. In some examples, character modeling component 117 may be contained on a server located outside of UE 100.

UE 100 may further include a photo edit component 119, configured to receive one or more visual preferences of an image of a user and apply the preferences to one or more photos containing images of the user. Photo edit component 119 is further discussed below.

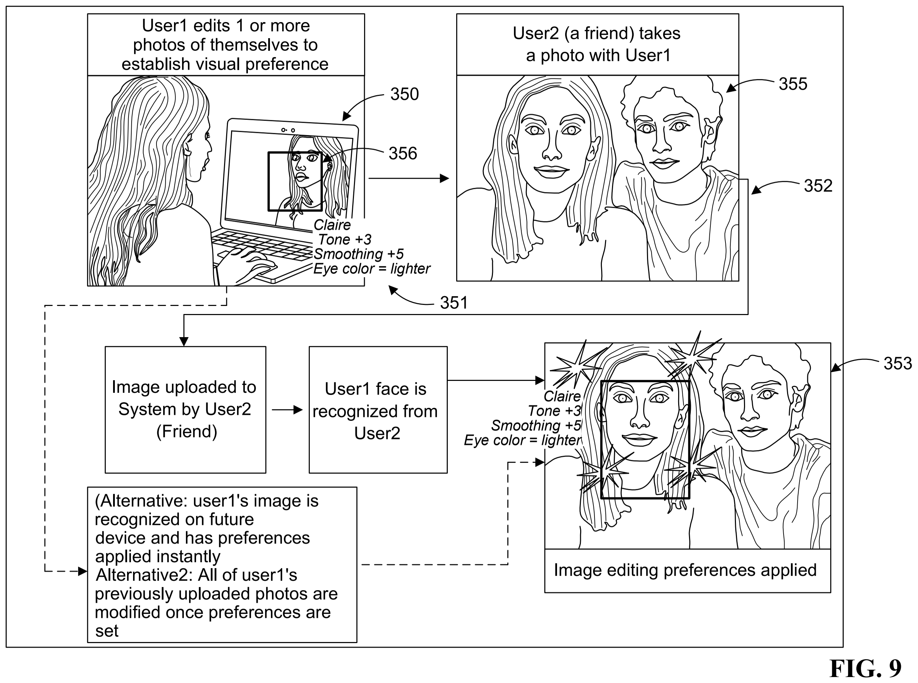

In some examples, the communication device(s) of FIG. 2 may further include a photo edit component 119 that may implement a machine learning model (e.g., machine learning model(s) 710) that may receive a user's (e.g., user 354 from FIG. 9) visual preferences (e.g., smoothing, eye color) to be applied to images of the user. The photo edit component may further be configured to identify one or more photos (e.g., photo(s) 352 from FIG. 9) containing a user's (e.g., user 354) image. In another example, a user (e.g., user 354) may apply visual preferences (e.g., preferences 351 from FIG. 9) to one or more photos (e.g., photo(s) 350) on a device (e.g., UE 100) using a user interface (e.g., display/touchpad/user interface(s) 112). The photo edits may be applied using generative AI technology. The device may utilize photo edit component 119 to identify all photos on the device containing an image of user 354 and apply preferences 351 to those photos.

In another example, after the user 354 may have applied visual preferences (e.g., preferences 351) to one or more photos/images (e.g., photo(s) 350) contained on a device (e.g., UE 100) via a user interface (e.g., display/touchpad/user interface(s) 112), the device may send the visual preferences to other devices (e.g., UE(s) 100, computing system(s) 300, or artificial reality system(s) 400) containing photo edit components (e.g., photo edit component(s) 119, photo edit component(s) 316, or photo edit component(s) 420) using a network (e.g., network 155). In an example, the device may send the visual preferences to devices associated with the user's (e.g., user 354) contact list (e.g., from a communication device or computer system) or friend's list (e.g., on a social media site). After receiving the visual preferences, the device(s) (e.g., UE(s) 100, computing system(s) 300, or artificial reality system(s) 400) may utilize photo edit component(s) (e.g., photo edit component(s) 119, photo edit component(s) 316, or photo edit component(s) 420) to identify photos contained on the devices containing images with user 354's image and apply the visual preferences (e.g., preferences 351) to the photos.

In other examples, a user (e.g., user 354) may apply visual preferences (e.g., preferences 351) to one or more photos (e.g., photo(s) 350) contained on a device (e.g., UE 100) using a photo edit component (e.g., photo edit component 119). The device may then utilize the photo edit component to identify photos containing the user's (e.g., user 354) image associated with a social networking (e.g., social media) account associated with the user. In an example, the visual preferences may automatically be applied to photos containing the user's (e.g., user 354) image associated with the user's social networking account. In another example, the photo edit component may identify photos containing the user's (e.g., user 354) image that may be uploaded to accounts not associated with the user. The photo edit component may request permission, through the social networking site, to apply the user's (e.g., user 354) visual preferences to the photos containing images of the user (e.g., user 354) from the account not associated with the user. The social networking account not associated with the user (e.g., user 354) may grant permission for the photo edit component to apply the visual preferences to the user's (e.g., user 354) image in the photos.

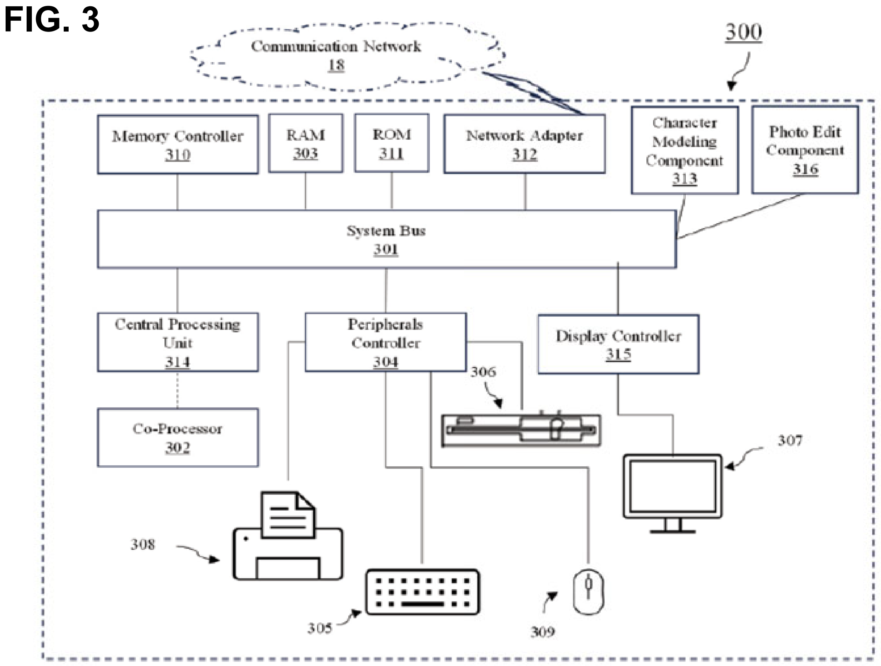

FIG. 3 is a block diagram of an exemplary computing system 300. In some examples, the network device 170 may be a computing system 300. The computing system 300 may include a character modeling component 313. The computing system 300 may include a computer or server and may be controlled primarily by computer-readable instructions, which may be in the form of software, wherever, or by whatever means such software is stored or accessed. Such computer-readable instructions may be executed within a processor, such as central processing unit (CPU) 314, to cause computing system 300 to operate. In many workstations, servers, and personal computers, central processing unit 314 may be implemented by a single-chip CPU called a microprocessor. In other machines, the central processing unit 314 may include multiple processors. Coprocessor 302 may be an optional processor, distinct from main CPU 314, that performs additional functions or assists CPU 314.

In operation, CPU 314 fetches, decodes, and executes instructions, and transfers information to and from other resources via the computer's main data-transfer path, system bus 301. Such a system bus connects the components in the computing system 300 and defines the medium for data exchange. System bus 301 typically includes data lines for sending data, address lines for sending addresses, and control lines for sending interrupts and for operating the system bus. An example of such a system bus 301 is the Peripheral Component Interconnect (PCI) bus.

Memories coupled to the system bus 301 include RAM 303 and ROM 311. Such memories may include circuitry that allows information to be stored and retrieved. ROMs 311 generally contain stored data that cannot easily be modified. Data stored in RAM 303 may be read or changed by CPU 314 or other hardware devices. Access to RAM 303 and/or ROM 311 may be controlled by memory controller 310. Memory controller 310 may provide an address translation function that translates virtual addresses into physical addresses as instructions are executed. Memory controller 310 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 300 may contain peripherals controller 304 responsible for communicating instructions from CPU 314 to peripherals, such as printer 308, keyboard 305, mouse 309, and disk drive 306.

Display 307, which is controlled by display controller 315, may be used to display visual output generated by computing system 300. Such visual output may include text, graphics, animated graphics, and video. The display 307 may also include, or be associated with a user interface. The user interface may be capable of presenting one or more content items and/or capturing input of one or more user interactions associated with the user interface. Display 307 may be implemented with a cathode-ray tube (CRT)-based video display, a liquid-crystal display (LCD)-based flat-panel display, gas plasma-based flat-panel display, or a touch-panel. Display controller 315 includes electronic components required to generate a video signal that is sent to display 307.

Further, computing system 300 may contain communication circuitry, such as for example a network adaptor 312, that may be used to connect computing system 300 to an external communications network, such as network 18 of FIG. 2, to enable the computing system 300 to communicate with other nodes (e.g., UE 100) of the network.

The character modeling component 313 may receive one or more requests to insert a 3D model into a photo (e.g., photo 250) captured by a device (e.g., UE 100, computing system 300). In response to receipt of such a request, the device may utilize character modeling component 313 to analyze the photo to understand the context of the scene (e.g., scene 255) of the photo. The device may utilize character modeling component 313 to recognize and identify the scene from a preset list of environments. The device may then utilize a character modeling component 313 to select contextually appropriate 3D asset (e.g., character 256) from a library (e.g., library 252). The library may include a selection of one or more versions of one or more models. Character modeling component 313 may then pose the model in a way that fits the scene (e.g., the model be lounging, waving, looking scared, putting an arm around someone). Additional 3D elements (e.g., element(s) 253) may be added utilizing character modeling component 313. Character modeling component 313 may then be utilized to occlude the 3D model with real-world objects in the photo. Computing system 300 may then generate an output photo 254 that includes the inserted 3D model and additional 3D elements.

In some examples, the character modeling component 313 may further include a MMAI model configured to identify the context of the scene of the photo, detect the terrain (e.g., planes, flat surfaces), or detect objects within the scene. In some examples, the character modeling component 313 may further include a segment anything model (SAM) configured to delineate various elements in the photo. In some examples, the photo may be sent via a network (e.g., network 155) to another device (e.g., UE 100, computing system 300, or artificial reality system 400) containing a character modeling component (e.g., character modeling component 117, character modeling component 313, or character modeling component 407) for analysis or insertion of 3D models. In some examples, character modeling component 313 may be contained on a server located outside of computing system 300.

Computing system 300 may further include a photo edit component 316, configured to receive one or more visual preferences of an image of a user and apply the preferences to one or more photos containing images of the user. Photo edit component 316 is further discussed below.

In some examples, the computing system 300 may further include a photo edit component 316 that may implement a machine learning model (e.g., machine learning model(s) 710) that may receive a user's (e.g., user 354) visual preferences (e.g., tone, smoothing, eye color) to be applied to images of the user. The photo edit component may further be configured to identify one or more photos (e.g., photo(s) 352 from FIG. 9) including a user's (e.g., user 354) image. In another example, a user (e.g., user 354) may apply visual preferences (e.g., preferences 351 from FIG. 9) to one or more photos (e.g., photo(s) 350) on a device (e.g., computing system 300) using a user interface (e.g., keyboard 305, mouse 309, or display 307). The photo edits may be applied using generative Al technology. The device may utilize photo edit component 316 to identify all photos on the device containing an image of user 354 and apply preferences 351 to those photos.

In another example, after the user 354 may have applied visual preferences (e.g., preferences 351) to one or more photos (e.g., photo(s) 350) contained on a device (e.g., computing system 300) via a user interface (e.g., keyboard 305, mouse 309, or display 307), the device may send the visual preferences to other devices (e.g., UE(s) 100, computing system(s) 300, or artificial reality system(s) 400) containing photo edit components (e.g., photo edit component(s) 119, photo edit component(s) 316, or photo edit component(s) 420) using a network (e.g., network 155). In an example, the device may send the visual preferences to devices associated with the user's (e.g., user 354) contact list (e.g., from a communication device or computer system) or friend's list (e.g., on a social media site). After receiving the visual preferences, the device(s) (e.g., UE(s) 100, computing system(s) 300, or artificial reality system(s) 400) may utilize photo edit component(s) (e.g., photo edit component(s) 119, photo edit component(s) 316, or photo edit component(s) 420) to identify photos contained on the devices containing images with user 354's image and apply the visual preferences (e.g., preferences 351) to the photos.

In other examples, a user (e.g., user 354) may apply visual preferences (e.g., preferences 351) to one or more photos (e.g., photo(s) 350) contained on a device (e.g., computing system 300) using a photo edit component (e.g., photo edit component 316). The device may then utilize the photo edit component to identify photos containing the user's (e.g., user 354) image associated with a social networking (e.g., social media) account associated with the user. In an example, the visual preferences may automatically be applied to photos containing the user's (e.g., user 354) image associated with the user's social networking account. In another example, the photo edit component may identify photos containing the user's (e.g., user 354) image that may be uploaded to accounts not associated with the user. The photo edit component may request permission, through the social networking site, to apply the user's (e.g., user 354) visual preferences to the photos containing images of the user (e.g., user 354) from the account not associated with the user. The social networking account not associated with the user (e.g., user 354) may grant permission for the photo edit component to apply the visual preferences to the user's (e.g., user 354) image in the photos.

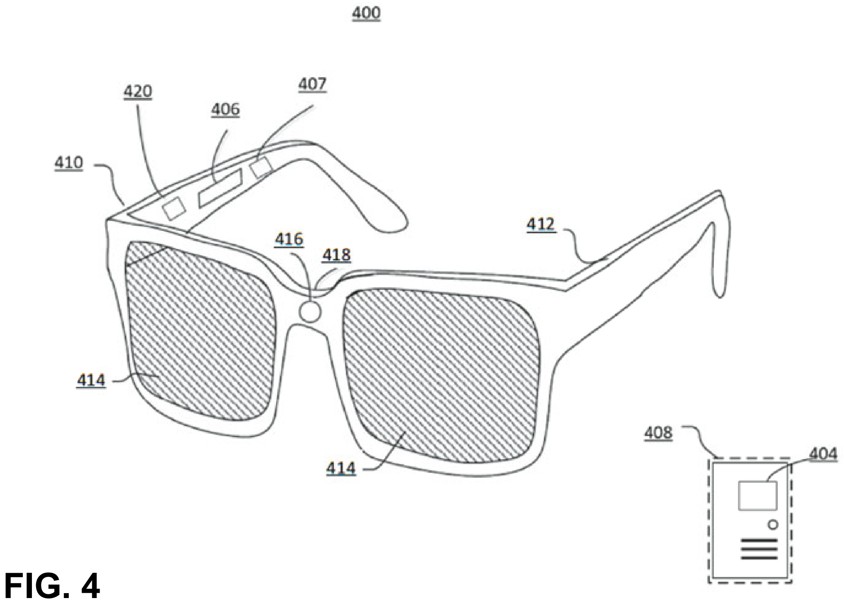

FIG. 4 illustrates an example artificial reality system 400. The artificial reality system 400 may include a head-mounted display (HMD) 410 (e.g., smart glasses and/or augmented/virtual reality device) comprising a frame 412, one or more displays 414, a computing device 408 (also referred to herein as computer 408), a controller 404, a character modeling component 407, and a photo edit component 420. In some examples, the HMD 410 may capture one or more items of text from one or more images/videos associated with a real-world environment in the field of view of one or more cameras (e.g., cameras 416, 418) of the artificial reality system 400. The HMD 410 may utilize the captured text from the one or more images/videos to trigger one or more actions/functions by the artificial reality system 400. The displays 414 may be transparent or translucent allowing a user wearing the HMD 410 to look through the displays 414 to see the real world (e.g., real world environment) and displaying visual artificial reality content to the user at the same time. The HMD 410 may include an audio device 406 (e.g., speakers/microphones) that may provide audio artificial reality content to users. The HMD 410 may include one or more cameras 416, 418 which may capture images and/or videos of environments. In one example, the HMD 410 may include one or more cameras 418 which may be a rear-facing camera tracking movement and/or gaze of a user's eyes.

One of the cameras 416 may be a forward-facing camera capturing images and/or videos of the environment that a user wearing the HMD 410 may view. The camera(s) 416 may also be referred to herein as a front camera(s) 416. The HMD 410 may include an eye tracking system to track the vergence movement of the user wearing the HMD 410. In one example, the camera(s) 418 may be the eye tracking system. In some examples, the camera(s) 418 may be one camera configured to view at least one eye of a user to capture a glint image(s) (e.g., and/or glint signals). The camera(s) 418 may also be referred to herein as a rear camera(s) 418. The HMD 410 may include a face tracking system to track the muscle movements (e.g., subtle muscle movements) and/or facial expressions/features of the user wearing the HMD 410. In another example aspect of the present disclosure, the camera(s) 418 may be the face tracking system. The camera(s) of the face tracking system may capture one or more images, videos, or the like and/or associated audio content to track the muscle movements of the user and/or the facial expressions of the user wearing the HMD 410.

The eye tracking system within the HMD 410 may determine pupil dilation(s) by utilizing one or more cameras (e.g., camera(s) 418) and/or other sensors such as scanning systems aimed at an eye(s) of a user(s). The cameras may capture high-resolution images and/or videos of the eye(s) at frequent intervals. In some example aspects, the eye tracking system may utilize image processing applications or image processing algorithms to analyze the captured images and/or videos in real-time to facilitate determination of pupil dilation(s).

The HMD 410 may include a microphone of the audio device 406 to capture voice input from the user. The artificial reality system 400 may further include a controller 404 comprising a trackpad and one or more buttons. The controller 404 may receive inputs from users and relay the inputs to the computer 408. The controller 404 may also provide haptic feedback to one or more users. The computer 408 may be connected to the HMD 410 and the controller 404 through cables or wireless connections. The computer 408 may control the HMD 410 and the controller 404 to provide the augmented reality content to and receive inputs from one or more users. In some example, the controller 404 may be a standalone controller or integrated within the HMD 410. The computer 408 may be a standalone host computer device, an on-board computer device integrated with the HMD 410, a mobile device, or any other hardware platform capable of providing artificial reality content to and receiving inputs from users. In some examples, the HMD 410 may include an artificial reality system/virtual reality system.

The audio device (e.g., audio device 406) may receive one or more requests to capture a photo (e.g., photo 250). The front camera (e.g., front camera 416) may capture a photo (e.g., photo 250). The artificial reality system 400 may implement a machine learning model (e.g., machine learning model(s) 710) including training data (e.g., training data 730) pre-trained, or trained in real-time, on one or more scenes (e.g., scene(s) 255) associated with one or more photos (e.g., photo(s) 250). Artificial reality system 400 may then utilize character modeling component 407 to analyze the photo (e.g., photo 250) to understand the scene (e.g., scene 255). The character modeling component may identify the scene in the photo through analysis. The artificial reality system 400 may then select a 3D asset (e.g., character 256) from a library (e.g., library 252). The library (e.g., library 252) may include one or more versions of one or more 3D models. The artificial reality system 400 may then utilize character modeling component 407 to pose the model selected from the library to fit the scene of the photo. Additional 3D elements (e.g., element(s) 253) may be applied to the 3D character 256 to enhance the realism and depth of the AR integration into the scene (e.g., in an instance in which the scene is a beach, the 3D model may have a beach ball applied to the scene of the beach). The artificial reality system 400 may then utilize character modeling component 407 to occlude the 3D model with real world objects in the photo (e.g., if there is a table in the foreground of the scene of a photo, the 3D model may appear as if it is standing behind the table, adding to the realism of the scene). Artificial reality system 400 may then generate an output photo 254 that includes the inserted 3D model and additional 3D elements.

In some examples, the character modeling component 407 may further include a MMAI model configured to identify the context of the scene of the photo, detect the terrain (e.g., planes, flat surfaces), or detect objects within the scene. In some examples, the character modeling component 407 may further include a segment anything model (SAM) configured to delineate various elements in the photo. In some examples, the photo may be sent via a network (e.g., network 155) to another device (e.g., UE 100, computing system 300, or artificial reality system 400) containing a character modeling component (e.g., character modeling component 117, character modeling component 313, or character modeling component 407) for analysis or insertion of 3D models. In some examples, character modeling component 407 may be contained on a server located outside of artificial reality system 400.

Artificial reality system 400 may further include a photo edit component 420, configured to receive one or more visual preferences of an image of a user and apply the preferences to one or more photos containing images of the user. In some examples, the photo edit component 420 may implement a machine learning model (e.g., machine learning model(s) 710) that may receive a user's (e.g., user 354) visual preferences (e.g., tone, smoothing, eye color) to be applied to images of the user. The photo edit component may further be configured to identify one or more photos (e.g., photo(s) 352 from FIG. 9) containing a user's (e.g., user 354) image. In another example, a user (e.g., user 354) may apply visual preferences (e.g., preferences 351 from FIG. 9) to one or more photos (e.g., photo(s) 350) on a device (e.g., artificial reality system 400) using a user interface (e.g., controller 404 or computer 408). The photo edits may be applied using generative AI technology. The device may utilize photo edit component 420 to identify all photos on the device containing an image of user 354 and apply preferences 351 to those photos.

In another example, in response to/after the user 354 may have applied visual preferences (e.g., preferences 351) to one or more photos (e.g., photo(s) 350) contained on a device (e.g., artificial reality system 400) via a user interface (e.g., controller 404 or computer 408), the device may send the visual preferences to other devices (e.g., UE(s) 100, computing system(s) 300, or artificial reality system(s) 400) containing photo edit components (e.g., photo edit component(s) 119, photo edit component(s) 316, or photo edit component(s) 420) using a network (e.g., network 155). In an example, the device may send the visual preferences to devices associated with the user's (e.g., user 354) contact list (e.g., from a communication device or computer system) or friend's list (e.g., on a social media site). After receiving the visual preferences, the device(s) (e.g., UE(s) 100, computing system(s) 300, or artificial reality system(s) 400) may utilize photo edit component(s) (e.g., photo edit component(s) 119, photo edit component(s) 316, or photo edit component(s) 420) to identify photos contained on the devices containing images with user 354's image and apply the visual preferences (e.g., preferences 351) to the photos.

In other examples, a user (e.g., user 354) may apply visual preferences (e.g., preferences 351) to one or more photos (e.g., photo(s) 350) contained on a device (e.g., artificial reality system 400) using a photo edit component (e.g., photo edit component 420). The device may then utilize the photo edit component to identify photos containing the user's (e.g., user 354) image associated with a social networking (e.g., social media) account associated with the user. In an example, the visual preferences may automatically be applied to photos containing the user's (e.g., user 354) image associated with the user's social networking account. In another example, the photo edit component may identify photos containing the user's (e.g., user 354) image that may be uploaded to accounts not associated with the user. The photo edit component may request permission, through the social networking site, to apply the user's (e.g., user 354) visual preferences to the photos containing images of the user (e.g., user 354) from the account not associated with the user. The social networking account not associated with the user (e.g., user 354) may grant permission for the photo edit component to apply the visual preferences to the user's (e.g., user 354) image in the photos.

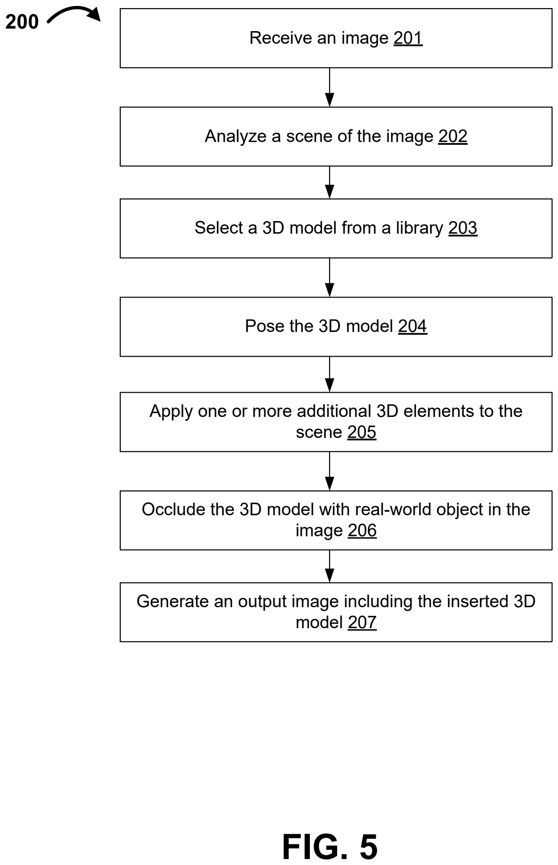

FIG. 5 illustrates a flow diagram of a process 200 for context-based insertion of one or more three-dimensional (3D) objects into an image, in accordance with various aspects of the present disclosure. The process 200 may be implemented at a computing device such as a UE 100, computing system 300, or artificial reality system 400 described herein. As shown in FIG. 5, the process 200 may begin at block 201 by receiving an image. The image may be stored at the device implementing the process 200 or another device, such as a cloud computing device. In some examples, the device may capture the image using one or more cameras associated with the device. The image may include a representation of a physical environment, such as an indoor or outdoor scene, and may include multiple real-world objects, surfaces, lighting conditions, and spatial features. The image may be captured in response to user input or may be captured automatically by the device as part of a continuous or intermittent image-capture process.

At block 202, the process 200 may analyze a scene of the image. This analysis may be performed using one or more machine learning models (e.g., machine learning model(s) 710), including but not limited to a multimodal artificial intelligence (MMAI) model configured to extract features from the image, and a segmentation model configured to delineate boundaries of objects, surfaces, and regions within the image. The analysis may include determining an environment type (e.g., beach, park, street, living room), detecting planes and surfaces (e.g., floor, table, ground), identifying spatial layout and depth cues, recognizing natural or man-made objects, inferring perspective, and classifying lighting and shadow characteristics. The machine learning model(s) may be pre-trained or dynamically trained in real-time using training data (e.g., training data 730 described with reference to FIG. 7) representing a wide variety of scenes and environmental conditions.

At block 203, the process 200 may select a 3D model from a library (e.g., library 252) based at least in part on the contextual characteristics of the image determined in block 202. The library may include a collection of 3D augmented-reality assets, including multiple versions of a particular 3D model tailored for different environmental contexts or stylistic variations. For example, the character modeling component (e.g., character modeling component 117, 313, or 407) may retrieve metadata associated with each 3D asset, compare the metadata with the detected scene attributes, and automatically select the asset or asset variation that best corresponds to the image's inferred environment. In some examples, the selection may account for pose compatibility, object scale relative to the environment, thematic appropriateness, or other scene-dependent factors.

At block 204, the process 200 may pose the selected 3D model. The character modeling component may compute a pose that aligns the 3D model with the spatial geometry of the image. This may include determining orientation, limb positions, gaze direction, or other kinematic adjustments based on the inferred camera angle, surface normals, surface orientation, and depth characteristics of the captured scene. Posing may involve geometric transformations, skeletal animation adjustments, or optimization routines that ensure that the 3D model appears naturally situated within the captured environment. For example, in a beach-scene image, the character may be posed as sitting, lounging, or interacting with scene-specific elements; in a standing environment, the pose may align with the detected floor plane.

At block 205, the process 200 may apply one or more additional 3D elements to the scene. These additional elements (e.g., element(s) 253) may be contextually relevant items such as accessories, props, or environmental details (e.g., a beach ball for a beach scene, a backpack for a hiking scene). The character modeling component may determine the position, scale, and placement of each additional 3D element relative to both the inserted 3D model and real-world features in the image. The 3D elements may enhance thematic consistency or visual integration and may be selected using the same or a separate model that evaluates environmental attributes and scene-specific affordances.

At block 206, the process 200 may occlude the 3D model with real-world objects appearing in the image. Using segmentation boundaries and depth-ordering information derived from block 202, the character modeling component may determine whether any real-world object in the captured image should appear in front of (i.e., visually occlude) the inserted 3D model. For example, if the image includes a table, fence, other person, or any foreground object, the system may mask portions of the 3D model so that the model appears partially or fully behind such elements. Occlusion may occur at the pixel level to ensure continuity of edges, shadows, and contours, thereby improving the realism and believability of the integrated scene.

At block 207, the process 200 may generate an output image including the inserted 3D model, additional 3D elements, and any occlusion adjustments. The process 200 may composite the original captured image and the rendered 3D content, apply blending operations, apply color or lighting matching to ensure consistent visual appearance, and produce an updated image (e.g., output photo 254) in which the inserted 3D model appears as a natural part of the original scene. The output image may be stored locally, transmitted to another device, displayed on a user interface, or used as input for further editing or processing operations.

In certain implementations, the techniques described with respect to the process 200 may provide functionality that is not available in conventional augmented-reality filters or image-manipulation systems. For example, conventional AR platforms may place a 3D character into a live camera view based primarily on planar detection or simultaneous localization and mapping (SLAM)-based surface estimation, and may depend on manual user manipulation to position, orient, or pose the virtual object. In contrast, conventional systems may use multimodal Al techniques to determine a contextual understanding of the environment depicted in the captured image, including identifying whether the scene represents a beach, trail, event space, indoor room, or other setting. As discussed, the process 200 may then select and pose a 3D model from a curated library of pre-approved assets in a manner that reflects the inferred scene context. In some examples, the process 200 may also retrieve and combine scene-appropriate accessories, props, or environmental elements that are associated with the selected 3D model, thereby enabling dynamic "paper-doll-style" assembly of complex contextual variations while ensuring that the resulting 3D content remains compliant with predetermined asset constraints such as brand accuracy or intellectual-property consistency.

In addition, whereas generative-Al systems may hallucinate or unpredictably modify features of known characters or objects, the process 200 may integrate generative inference only for scene understanding and segmentation, while preserving asset integrity by selecting from a structured library of 3D models and context-specific variations. The use of machine-learning models for automated scene classification, environment inference, image segmentation, and pose estimation enables the process 200 to perform geometric calculations, spatial reasoning, lighting analysis, and pixel-level occlusion in ways that are not practically achievable using manual editing tools or real-time user manipulation alone. As a result, the process 200 bridges modern multimodal-Al scene understanding with traditional AR rendering pipelines, producing an automatically generated 3D integration that reflects the semantic, spatial, and environmental characteristics of the underlying photograph. The process 200 therefore facilitates improved realism, reduced manual input, and enhanced contextual fidelity in the placement and integration of 3D content in digital images.

Furthermore, the operations of the process 200 are unable to be practically performed by a human, either mentally and/or manually. The process 200 performs high-dimensional mathematical analyses, including feature extraction, segmentation, pose estimation, pixel-level depth ordering, and geometric transformations, all of which require computational processing that humans cannot execute with comparable accuracy or speed. The process 200 further operates on large volumes of pixel data and multi-layer tensor representations generated by machine-learning models. As such, the disclosed operations are not mental processes and cannot be carried out by human thought or hand-performed image manipulation.

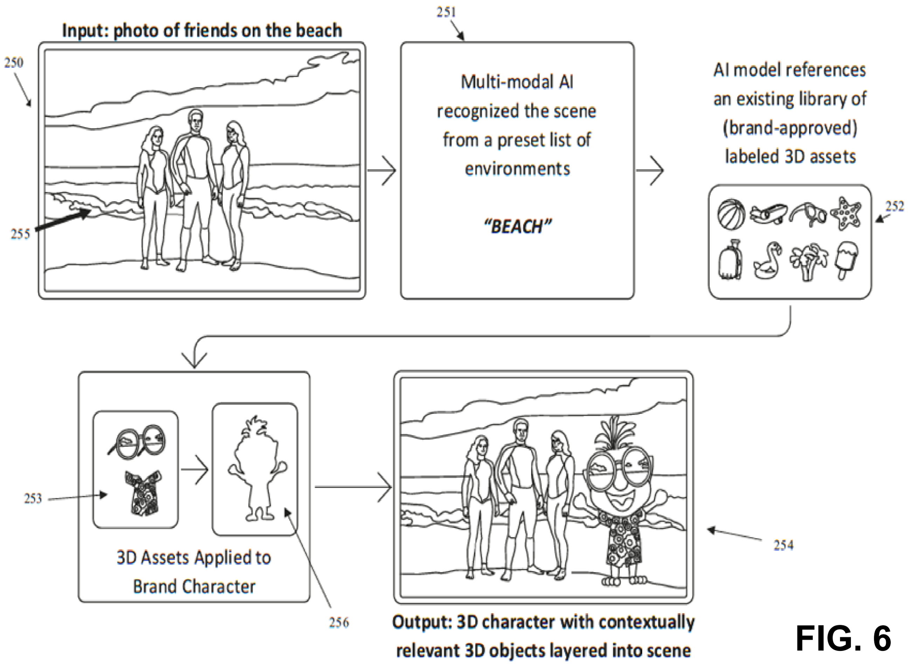

FIG. 6 illustrates an example system for context-based insertion of one or more 3D objects into an image, in accordance with various aspects of the present disclosure. As shown in the example of FIG. 6, the input into the system may be a photograph 250 (e.g., image) captured by a device such as UE 100, computing system 300, or artificial reality system 400. The system may be implemented on the same device that captured the photograph 250 or a different device. The photograph 250 may depict a scene 255 (e.g., physical environment), which may include one or more people, natural features, background elements, and/or other real-world objects.

A character modeling component (e.g., character modeling component 117, 313, or 407) executed by the device may analyze scene 255 to determine one or more characteristics of the depicted environment. In some examples, the character modeling component may include or interface with a multimodal AI model configured to perform scene classification, depth estimation, segmentation, or other computer-vision operations. As shown in block 251, the multimodal Al model may recognize the scene from a preset or dynamically learned list of environment types, such as "beach," "forest," "office," "mountains," or other classifications derived from training data. Scene recognition may be based on a combination of pixel-level features, semantic feature embeddings, spatial cues, object identities, or lighting characteristics extracted from photograph 250.

Based at least in part on the contextual understanding of the scene 255, the character modeling component may select one or more 3D models from a library 252, which may contain a curated set of brand-approved or pre-labeled 3D assets. Library 252 may include multiple environment-specific versions of each 3D asset, allowing the system to choose a model variant that aligns with the detected environment. For example, as shown in FIG. 6, the library 252 may include accessories or props suitable for beach contexts, hiking contexts, underwater contexts, or other thematic settings. The character modeling component may retrieve metadata associated with each asset, evaluate compatibility between a detected scene type and available model variations, and automatically select a character 256 that is contextually appropriate for the scene. The character 256 may also be referred to as a 3D model, a 3D asset, a virtual object, a virtual character, a computer-generated representation, an AR object, a digital character, an avatar, a synthetic entity, a polygonal mesh, or any other computer-rendered or renderable three-dimensional entity suitable for insertion into an image. The character 256 may depict a human being or any other real-world or fictional subject, including an animal, creature, animated figure, cartoon character, avatar, robot, object, mythical entity, or other computer-generated persona.

Once the character 256 is selected, the character modeling component may pose the character 256 in a manner that aligns with spatial and geometric properties inferred from the scene. Posing may include determining the character's 256 orientation, limb configuration, eye direction, or other attributes based on the detected camera angle, depth cues, surface plane orientations, and other geometric information inferred from the scene 255. In some examples, the posing may incorporate inferred user activities or environment-specific behaviors (e.g., raising arms at the beach, sitting in a chair, or leaning against a surface).

As further shown in FIG. 6, the character modeling component may also apply one or more additional 3D elements 253 to the character 256. These 3D elements 253 may include, for example, environment-specific props or accessories, such as goggles, beach balls, sunglasses, inflatables, or other contextual assets that enhance thematic consistency. The component may select these additional 3D elements 253 based on scene attributes, object identities within the image, user preferences, or metadata associated with the selected 3D model.

In addition, the character modeling component may determine whether any real-world elements in photo 250 should occlude all or a portion of the inserted 3D model. Using segmentation masks and depth-ordering information derived from the multimodal Al analysis, the system may determine whether the inserted character 256 should appear behind foreground objects such as tables, chairs, people, or other items present within scene 255. In instances in which occlusion is applied, portions of the character 256 may be pixel-masked, depth-clipped, or re-rendered to produce a cohesive integration within the existing environment.

After selection, posing, accessory application, and occlusion processing, the device may generate an output photograph 254 in which the inserted 3D model and any additional 3D elements are contextually integrated into the scene. The output photograph may reflect lighting adjustments, color harmonization, shadow blending, or edge-smoothing enhancements performed by the character modeling component to improve visual coherence.

As discussed, in some examples, a device such as UE 100, computing system 300, or artificial reality system 400 may capture photo 250 and transmit the photo to one or more remote devices over a network (e.g., network 155). The receiving device(s) may include a character modeling component (e.g., character modeling component 117, 313, or 407) configured to perform some or all of the processing operations described herein. In some implementations, the captured photo may be sent to a remote server 172 that stores or executes one or more machine-learning models used for scene recognition, 3D asset selection, model posing, or occlusion handling. The server 172 may return an output photograph 254 to the original capturing device or to another device associated with a user. In other examples, a distributed architecture may be used in which scene analysis occurs on one device while asset selection, posing, or rendering occurs on another device. Such distributed processing may enable low-latency inference, reduced device-side compute overhead, or improved use of specialized hardware resources such as GPUs or NPUs located on the server 172 or computing systems 300. The system of FIG. 6 may therefore support device-local processing, server-assisted processing, or hybrid processing workflows, enabling flexible deployment across mobile devices, augmented-reality headsets, desktop platforms, and cloud-based rendering environments.

FIG. 7 illustrates an example of a machine learning framework 700 including machine learning model(s) 710 and a training database 720, in accordance with one or more examples of the present disclosure. The training database 720 may store training data 730. In some examples, the machine learning framework 700 may be hosted locally in a computing device or hosted remotely. By utilizing the training data 730 of the training database 720, the machine learning framework 700 may train the machine learning model(s) 710 to perform one or more functions, described herein, of the machine learning model(s) 710. In some examples, the machine learning model(s) 710 may be stored in a computing device. For example, the machine learning model(s) 710 may be embodied within a communication device (e.g., UE 100). In some other examples, the machine learning model(s) 710 may be embodied within another device (e.g., computing system 300 or artificial reality system 400). Additionally, the machine learning model(s) 710 may be processed by one or more processors (e.g., processor 102 of FIG. 2, coprocessor 302 of FIG. 3). In some examples, the machine learning model(s) 710 may be associated with operations (or performing operations) of FIG. 5, FIG. 8 and FIG. 10. In some other examples, the machine learning model(s) 710 may be associated with other operations.

In an example, the training data 730 may include attributes of thousands of objects. For example, the objects may be posters, brochures, billboards, menus, goods (e.g., packaged goods), books, groceries, Quick Response (QR) codes, smart home devices, home and outdoor items, household objects (e.g., furniture, kitchen appliances, etc.), and any other suitable objects. In some other examples, the objects may be smart devices (e.g., UEs 100, communication devices 135, 140, 145, 150), persons (e.g., users), newspapers, articles, flyers, pamphlets, signs, cars, content items (e.g., messages, notifications, images, videos, audio), and/or the like. Attributes may include, but are not limited to, the size, shape, orientation, position/location of the object(s), etc. The training data 730 employed by the machine learning model(s) 710 may be fixed or updated periodically. Training data 730 may be updated periodically with data accumulated after/in response to any prior update(s). Alternatively, the training data 730 may be updated in real-time based upon the evaluations performed by the machine learning model(s) 710 in a non-training mode. This may be illustrated by the double-sided arrow connecting the machine learning model(s) 710 and stored training data 730. Some other examples of the training data 730 may include, but are not limited to, items of content determined as being associated with a network (e.g., the Internet, a social network, etc.). The items of content may be analyzed, by a device (e.g., computing system 300, UE 100, or artificial reality system 400), to understand the context of image, text or photos in the items of content, or to identify the scenes of photos contained in the items of content. These items of content associated with images or text shared to social networking sites may be provided as a subset of the training data 730 to the training database 720 and may be utilized, in part, to pre-train, and/or train in real-time, the machine learning model(s) 710. Additionally, other content items such as, for example, prior or currently (e.g., in real-time) scenes of one or more photos and/or contexts associated with one or more images or photos may be another subset of the training data 730. In this regard, in an instance in which the machine learning model(s) 710 may identify a scene in, or associated with, the training data 730 and may determine that the scene is of a same or similar type as a scene of a photo being analyzed, the machine learning model(s) 710 may automatically identify the scene in the photo being analyzed.

In some examples, a component (e.g., character modeling component 117, character modeling component 313, or character modeling component 407) and/or a device (e.g., UE 100, computing system 300, or artificial reality system 400) may implement the machine learning model(s) 710 to identify the scene of a photo (e.g., photo 250). The scene may be recognized from a preset list of environments. The character modeling component may also reference an existing library (e.g., library 252) of 3D models contained on a device (e.g., UE 100, computer system 300, or artificial reality system 400). The library (e.g., library 252) may contain additional 3D assets (e.g., model(s) 253) that may be applied to a model (e.g., character 256) to enhance the realism and depth of the AR integration. The device may generate an output photo (e.g., photo 254) after occluding the 3D model with real-world objects in the photo.

In some examples, the synthetic data may, but need not, be modified/changed to certain content that may be marked based on a tag/format or the like from data associated with for example a user(s) that may have edited or created this data to enable the machine learning framework 700 to form/generate new data examples. In this manner, the machine learning framework 700 may have diversity and may include many more datasets for the training data 730.

Additionally, or alternatively, in some examples, the training data 730 may include, but is not limited to, examples of original photos, objects in the photos, categories of visual preferences for the object, and edited photos conforming to applied visual preferences. The photos may be analyzed, by a device (e.g., computing system 300, UE 100, or artificial reality system 400), to identify an image in one or more photos. These categories of original photos, objects in the photos, visual preferences, and edited photos may be provided as a subset of the training data 730 to the training database 720 and may be utilized, in part, to pre-train, and/or train in real-time, the machine learning model(s) 710. Additionally, other content items such as, for example, prior or currently (e.g., in real-time) visual preferences, original photos, and edited photos may be another subset of the training data 730. In this regard, in an instance in which the machine learning model(s) 710 may identify and isolate an object(s) within photos in, or associated with, the training data 730 and may determine that an object(s) of the same or similar type is present in one or more photos being analyzed, the machine learning model(s) 710 may automatically determine/identify and isolate the object in the photo(s) being analyzed and may apply edits to the object(s) based on the visual preferences.

In some examples, a component (e.g., photo edit component 119, photo edit component 316, or photo edit component 420) and/or a device (e.g., UE 100, computing system 300, or artificial reality system 400) may implement the machine learning model(s) 710 to receive visual preferences (setting(s) 351) for one or more images of a user (e.g., user 354) in a photo (e.g., photo 350) and identify the user's image in one or more photos. The machine learning model(s) 710 may then edit the user's image to conform to the visual preferences. A device (e.g., UE 100, computer system 300 or artificial reality system 400) may share the visual preferences across a network of devices that may contain a photo edit component (e.g., photo edit component 119, photo edit component 316, or photo edit component 420). The machine learning model(s) 710 may also identify the user's (e.g., user 354) image on photos (e.g., photo(s) 352) contained on other devices (e.g., UE(s) 100, computing system(s) 300, or artificial reality system(s) 400) containing a photo edit component (e.g., photo edit component 119, photo edit component 316, or photo edit component 420). The machine learning model(s) 710 may then edit the images of the user to conform to the visual preferences. In another example, the machine learning model(s) 710 may identify a user's (e.g., user 354) image on photos (e.g., photo(s) 352) shared on social networking sites (e.g., social media). In one aspect, the machine learning model(s) 710 may identify the user's (e.g., user 354) image in photos shared on social networking sites (e.g., social media) by other user's (e.g., user(s) 355) associated with user 354's contacts list (e.g., friends list or contacts list on the user's social media account). In another aspect, the machine learning model(s) 710 may identify the user's (e.g., user 354) image in photos shared on platforms, networks (e.g., social networking sites (e.g., social media)), or the like in which the user (e.g., user 354) is tagged (e.g., identified as present) in the photo.

As discussed, conventional photograph-editing applications generally operate on a single device or within a user's personal account and may allow users to apply cosmetic or stylistic adjustments, such as, but not limited to red-eye removal, filtering, lighting corrections, or eye-color changes. These systems typically require that the user manually edit an image stored locally on the device or within an associated account. As a result, existing tools are typically limited to images that the user directly controls and are typically unable to automatically modify photographs taken, shared, or uploaded by third-party users on other devices or accounts.

Conventional photo-retouching workflows may be restricted to images associated with the user's own device or profile, and lack the ability to maintain visual consistency for the same individual across photographs captured or posted by others. For example, for photographs taken at social gatherings or shared across different accounts, each image may portray an individual differently depending on lighting conditions, camera hardware, or whether the primary uploader chose to apply edits. This may result in inconsistent representations of that individual across devices and online platforms. Existing systems lack the capacity to automatically identify the individual across disparate images, retrieve the individual's preferred visual attributes, or apply those preferences to photographs originating from third parties.

Various aspects of the present disclosure are directed to systems and methods to apply personalized visual preferences to photographs and/or images using generative artificial intelligence techniques. In various examples, the system may determine one or more preferred attributes of an individual's appearance, such as skin-smoothing level, lighting adjustments, eye-color representation, or other stylistic features, based on one or more reference images or user-selected examples. These preferences may be shared across a network of devices or accounts associated with the individual or the individual's contacts. When a photograph is later captured or shared by a third-party device (e.g., a friend's device listed in the individual's contacts list), or uploaded to an online platform that identifies or tags the individual, the system may automatically detect the individual in the photograph using facial recognition or other Al-based identification methods. Once identified, the system may apply the previously determined preferences to the individual's representation within the third-party image. In some exemplary cases, preferences may be applied to photographs already posted online, enabling retroactive updating of images to align with the individual's preferred appearance.

Accordingly, exemplary aspects of the present disclosure provide several technical improvements over existing systems. The disclosed techniques may utilize generative Al models (e.g., machine learning model(s) 710) capable of context-aware in-painting to modify the portions of the image corresponding to the individual while preserving lighting, shading, and geometric consistency. The individual's preferred image attributes may be shared across a network (e.g., network 155) and/or social-graph-based system (e.g., system 130), allowing edits to be propagated across devices belonging to selected contacts and across accounts on online platforms (e.g., social spaces). The system may automatically identify the individual in photographs captured by devices associated with a trusted list of contacts or in photographs in which the individual is tagged on a platform (e.g., social-media platform) network, or the like. In response, the system may automatically apply edits conforming to the individual's stored preferences. These capabilities may enable consistent representation of an individual's preferred appearance across disparate devices, accounts, and/or contexts-including both newly captured images and previously existing photographs-while reducing the burden of manual editing.

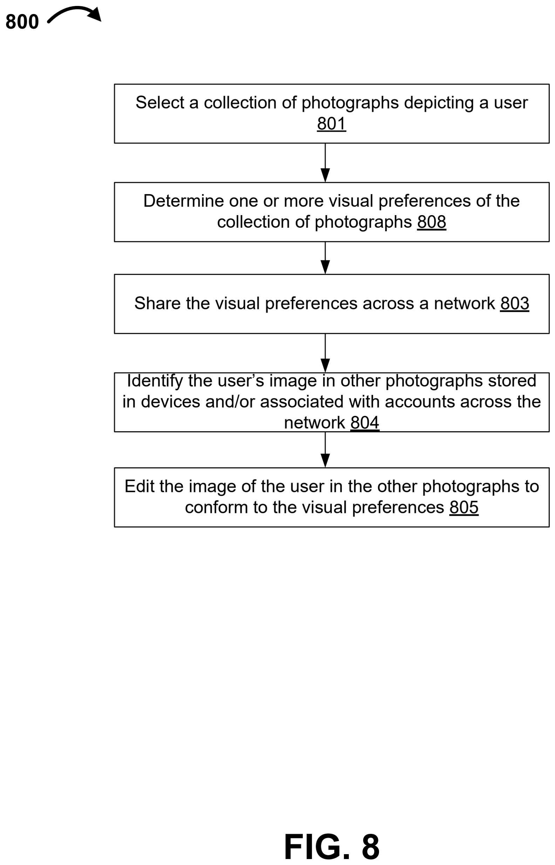

FIG. 8 illustrates an example of a process 800 for applying personalized visual preferences to photographs across a network of devices and accounts, in accordance with various aspects of the present disclosure. The process 800 may be implemented at a single device, a distributed set of devices, a cloud-based server, or a hybrid arrangement in which different stages of the process are performed at different components of the system, including but not limited to UE 100, computing system 300, artificial reality system 400, and server 172. As shown in FIG. 8, at block 801, a user (e.g., user 354) may select a collection/set of photographs (e.g., photos 350) that include depictions of the user's image. The photographs may be selected manually through a user interface on a device (e.g., UE 100, computing system 300, or artificial reality system 400), or the system may automatically identify images containing the user using face-recognition or object-detection models. The selected collection may include both recently captured images and historical images stored on the device or accessible through user accounts.

At block 802, the process 800 may determine one or more visual preferences (e.g., preferences 351) associated with the user's image by analyzing the collection/set of photographs using a photo edit component (e.g., photo edit component 119, 316, or 420). The photo edit component may implement one or more machine-learning models configured to extract stylistic and aesthetic attributes from the user's image, such as smoothing, lighting tone, color balance, eye-color representation, or other features. Alternatively, the user may explicitly set or adjust visual preferences directly on the device or within an account associated with a social-networking service. The resulting visual preferences may serve as a reference profile describing how the user prefers to appear across images.

At block 803, the process 800 may share the determined visual preferences (e.g., preferences 351) across a network. The network may include a collection of devices associated with the user's contact list, a group of trusted devices, or accounts linked through a social-networking platform. Visual preferences may be synchronized through cloud storage, peer-to-peer transfer, or social-graph-based propagation so that other devices within the network may apply the preferences upon detecting images of the user.

At block 804, the process 800, via a photo edit component (e.g., photo edit component 119, 316, or 420), may identify the user's image in photographs stored locally on the device or supplied by other accounts across the network. In one example, devices within the user's contact list (e.g., friends, family, group members) may automatically scan their photo libraries or newly captured images for occurrences of user 354 using facial-recognition or multimodal identification models. In another example, the process 800 may detect images of the user in photographs uploaded to social-networking services (e.g., photos 352), including photographs shared by other users associated with user 354's friends list. The process 800 may also identify the user's presence in uploaded photographs in which the user is tagged or otherwise identified by the platform. Identification may include comparing face embeddings, contextual cues, or metadata associated with the image.

At block 805, the process 800 may use the photo edit component to apply the visual preferences to the user's representation in identified photographs. For images stored locally on a device, the system may automatically edit the user's image within each photograph using Al-based in-painting, region-specific synthesis, lighting-aware blending, and other generative techniques that selectively alter only the user's features while preserving surrounding content. In the case of photographs uploaded to a social-networking site, the device or a server may retrieve the photograph, identify the user, and generate an updated version of the photograph in which the user's appearance conforms to the visual preferences.

In some exemplary aspects, photographs captured and/or stored on devices associated with the user's contacts may be automatically updated to reflect the user's preferences once the preferences have been shared across the network. In another exemplary aspect, images uploaded to a platform (e.g., a social-networking platform) network, or the like by users not included in the user's contact or friend's list may also be modified if/in an instance in which the user is tagged or otherwise identified by the platform/network. The system may apply edits retroactively to historical images or prospectively to newly uploaded images, allowing consistent representation of the user's preferred appearance across past and future photographs. As discussed, the process 800 may generate an edited photograph (e.g., photo 353) that includes a modified representation of user 354 conforming to the visual preferences (e.g., preferences 351). The edited photograph may be saved locally, uploaded to a social-networking site, shared with other devices, or stored in an image library associated with the user.

In some examples, the photo edit component may be implemented on a server external to the device (e.g., server 172). In these examples, the visual preferences (e.g., preferences 351) may be transmitted from a user device to the server, where the server-based photo edit component may apply the preferences to local photographs, remote photographs, or photographs stored on social-networking services. A client application executing on the device may provide an interface for setting or modifying the preferences, transmitting photographs for editing, or retrieving edited photographs generated by the server. In other implementations, the server-based photo edit component may directly interface with a social-networking platform to apply the user's visual preferences to photographs uploaded to the platform, including photographs uploaded by other users or photographs in which the user is tagged. In some examples, hybrid device-server processing may also be utilized. In such examples, identification occurs on the device while preference-conforming edits may be generated on the server or vice versa.

FIG. 9 illustrates an example of applying personalized visual preferences to photographs on a device or across a network of devices and accounts, in accordance with various aspects of the present disclosure. As shown in FIG. 9, one or more photographs 350 stored on a device such as UE 100, computing system 300, or artificial reality system 400 may contain an image of a user 354. In some examples, user 354 may select a set of photographs depicting themselves, and the device may implement a photo edit component (e.g., photo edit component 119, 316, or 420) to analyze those photographs and determine visual attributes of the user's appearance. Based on this analysis, the photo edit component may generate a set of personalized visual preferences (e.g., preferences 351), representing preferred stylistic characteristics such as smoothing levels, tone adjustments, lighting preferences, or eye-color representation. In other examples, the user may explicitly specify desired appearance attributes through a user interface such as display/touchpad/user interface 112, display 307, keyboard 305, mouse 309, controller 404, or computer 408, and the photo edit component may store these attributes as preferences 351. The device may implement the photo edit component to recognize an image of a user 354 in photographs using facial recognition, segmentation, or multimodal embedding techniques. Frame 356 illustrates an example of the photo edit component identifying user 354 in a photograph 350. The device may additionally identify photographs containing user 354 stored locally or uploaded to a social-networking site associated with an account of the user 354. After identification, the device may apply preferences 351 to such photographs and update the user's appearance either in real time or retroactively in previously captured or uploaded images. The preferences 351 may include one or more settings associated with the desired visual appearance of a user in a photograph. Such settings may include, but are not limited to, stylistic filters, lighting adjustments, color-tone modifications, brightness or contrast adjustments, smoothing levels, sharpening settings, eye-color adjustments, skin-tone corrections, exposure preferences, detail-preservation settings, or any other photographic or aesthetic parameter configured to modify the user's appearance. In some examples, the preferences 351 may further include effect settings, shading or highlight adjustments, environment-aware transformations, or combinations of these and other image-editing attributes.

In another example, a device implementing a photo edit component may transmit the visual preferences across a network, such as network 155, to one or more devices associated with contacts of user 354 (e.g., devices associated with user 355). These devices may execute a compatible photo-editing component capable of identifying user 354 within photographs stored on or captured by the device. Devices belonging to contacts listed in a contact list of the user 354 or social-media friend list may analyze their photo libraries using face-recognition or multimodal identification models to detect occurrences of user 354. When a photograph 352 containing user 354 is detected, the receiving device may apply preferences 351 to update the user's appearance. A modified photograph 353 may then be generated in which the appearance of user 354 conforms to the preferred visual attributes, thereby enabling consistent representation of user 354 across photographs captured and/or stored by other users.

In some examples, the system may identify photographs 352 containing user 354 uploaded to social-networking platforms by accounts associated with user 354, such as accounts in the friend list or contacts list of the user 354. A device or remote server may use the photo edit component to detect user 354 within these photographs through platform-based tagging or platform-integrated face-recognition features. After identifying the user 354, the photo edit component may automatically apply preferences 351 to modify the user's appearance in the uploaded photograph, generating an updated version that conforms to the user's visual preferences.

In other examples, photographs 352 containing user 354 may be uploaded by accounts not associated with user 354's account. When user 354 is tagged in such a photograph, the system (e.g., system 130) may automatically apply preferences 351 to the user's appearance. When user 354 is not tagged, the system may analyze the photograph to identify user 354 using multimodal identification models. If user 354 is detected in a photograph uploaded by an unassociated account, the system may transmit a permission request to the uploader or platform according to the social network's privacy settings. After permission is granted, the system may apply preferences 351 to generate a modified version of the photograph in which the representation of user 354 conforms to the user's visual preferences.

In some implementations, the photo edit component may be hosted on a server external to the device. The visual preferences may be transmitted from devices associated with user 354 to the server, where the server-based photo edit component may apply the preferences to local, remote, or platform-hosted photographs. A client application on the user's device may provide an interface for creating or modifying preferences, for transmitting photographs to the server, or for retrieving edited photographs generated by the server. The server-based photo edit component may also interface directly with a social-networking platform to apply the visual preferences to photographs uploaded to the user's account or photographs in which the user is tagged. In some hybrid implementations, the device may perform local identification of the user while the server performs the generative editing operations, or vice versa, thereby enabling a balance between computational efficiency, low latency, and high-quality image-editing output.

The operations described with reference to FIGS. 7, 8, and 9 may function together as a unified pipeline for generating, distributing, and applying personalized visual preferences across devices, accounts, and social-networking platforms. In various examples, training data 730, including original photographs, objects depicted in those photographs, visual-preference labels, and edited photographs, may be stored in training database 720 and used by machine-learning model(s) 710 to learn mappings between a user's appearance and associated preferred stylistic attributes. Using these models, a device may analyze one or more photographs 350 of a user 354 to determine a set of personalized visual preferences 351, either automatically from image characteristics or manually through user-specified selections. Once generated, these preferences may be shared across a network 155 to other devices or accounts associated with the user's contacts, enabling the preferences to propagate throughout a set of trusted devices or connected social-graph nodes. Devices receiving the preferences may utilize the photo edit component to identify user 354 in photographs 352 stored locally or uploaded to online platforms, including images posted by the user, by contacts, or by unrelated accounts where user 354 is recognized or tagged. After identification, the system may apply the visual preferences 351 to the user's representation in each photograph, using generative or discriminative AI techniques such as segmentation, in-painting, or lighting-aware synthesis, thereby modifying only the user's appearance while preserving surrounding image content. The edited photographs 353 may be generated locally or via a server-based photo edit component, depending on system configuration, and may be saved, shared, or published in place of or in addition to the original images. Through these operations, the system provides an end-to-end framework that enables consistent, preference-conforming representations of a user across photographs captured, stored, or shared by multiple devices and accounts, including retroactive updates to historical images and real-time edits to newly captured or uploaded photographs.

In various implementations, the operations illustrated in FIGS. 5, 6, 8, and 9 may function together within a unified image-processing framework that enables both context-based insertion of 3D objects into a photograph and the automatic application of personalized visual preferences to one or more users depicted in that photograph. For example, referring to FIGS. 5 and 6, a device may first capture or receive an input photograph and analyze the scene to determine contextual characteristics, including environment type, spatial layout, depth cues, occlusion boundaries, and semantic attributes. Using these characteristics, the system may select a 3D model from a curated library of context-appropriate 3D assets, pose the selected model using geometric transformations computed/determined from camera orientation and inferred surface normals, and optionally incorporate additional 3D props or accessories that match the detected environment. In various aspects of the present disclosure, "props" or "3D props" refer to additional objects, accessories, augmentations, or virtual elements that may be placed within a scene in conjunction with a primary 3D model. These props may include any computer-generated item, object, accessory, or environmental element, such as, but not limited to, tools, toys, clothing items, scenery components, or thematic objects, selected to complement or match the contextual attributes of the environment identified in the photograph. The props may be rendered, positioned, or oriented using the same geometric, environmental, or semantic cues used to pose the primary 3D model, and may enhance the realism, narrative, or contextual coherence of the integrated scene.

The system may then integrate the 3D model into the photograph using pixel-level or region-level compositing, which may include generating soft or hard occlusion masks, evaluating shading alignment, and performing lighting-consistent rendering of the inserted 3D content. These operations may yield an intermediate composite image that incorporates a virtual 3D element placed consistently within the real-world scene.

In conjunction with or subsequent to these operations, and as illustrated in FIGS. 8 and 9, the same device or a networked device may analyze the composite image to identify one or more users depicted therein and apply personalized visual preferences corresponding to those users. The visual preferences may have been determined earlier through user selection or through the system's analysis of reference photographs, and may include preferred smoothing levels, lighting or tone adjustments, color characteristics, detail preservation settings, or other stylistic attributes. After identifying a user within the composite image, whether through face-recognition embeddings, segmentation models, multimodal matching, or tag-based identification, the system may generate localized edits to the user's representation while preserving both the underlying original photograph and the inserted 3D model. These edits may be applied using generative or hybrid generative-discriminative techniques, including in-painting, region-specific synthesis, or lighting-aware blending operations. In some examples, the system may update the user's appearance prior to insertion of the 3D character, enabling the user's modified appearance to influence downstream rendering, such as shadow interactions or color matching. In other examples, the preference-based edits may occur after the 3D model is inserted, ensuring that the 3D object is not altered by preference edits. In additional implementations, both pipelines may operate in parallel, each producing intermediate tensor representations of the image, with the final composite image produced after merging scene-analysis results, 3D-model insertion outputs, and user-preference edits.

The combined workflow may also support network-level propagation. If the user's visual preferences are shared across a network of devices or social-networking accounts, then photographs captured or uploaded by contacts that include both the user and an inserted 3D model may be automatically edited so that the user's representation conforms to their visual preferences while maintaining the integrity of the inserted 3D element. For example, a friend may capture a photograph containing user 354 and a digitally inserted 3D character, upload it to a social-networking platform, and the system may automatically identify user 354 within the uploaded image, retrieve stored visual preferences, and modify an appearance of the user without altering the inserted 3D character or its contextual integration. Thus, the pipeline enables an image to simultaneously reflect a contextually appropriate virtual 3D insertion and a preference-conforming visual representation of the real-world user, producing a unified result in which virtual and real elements coexist with consistent lighting, occlusion, geometry, and stylistic appearance.

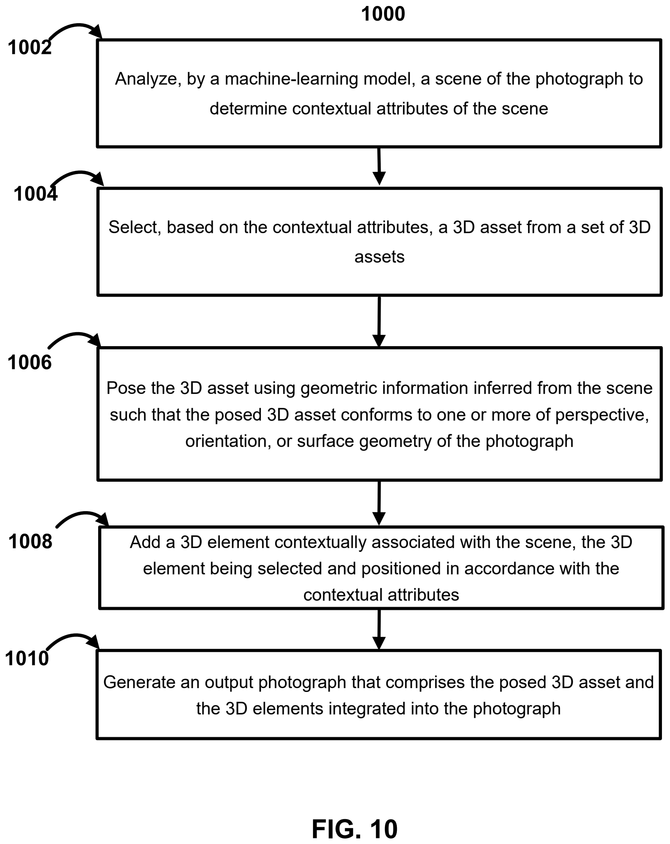

FIG. 10 is a flow diagram of a process 1000 for processing a photograph using artificial-intelligence techniques to insert a contextually appropriate three-dimensional object and apply personalized visual preferences. The process 1000 may be implemented by a device such as a UE 100, computing system 300, artificial reality system 400, a remote server 172, or any combination thereof. As shown in the example of FIG. 10, the process 1000 begins at block 1002 by analyzing, by a machine-learning model, a scene of the photograph to determine contextual attributes of the scene. The contextual attributes may include one or more of an environment type, a spatial layout, depth cues, object boundaries, or lighting characteristics. In some examples, analyzing the scene may include generating a segmentation map of the photograph using a segmentation model to delineate object boundaries, foreground regions, or background regions, and may further include generating geometric information such as inferred camera angle or surface normals.

At block 1004, the process 1000 selects, based on the contextual attributes, a 3D asset from a set of 3D assets. The 3D asset may comprise one or more of a virtual character, an avatar, an animated figure, a synthetic entity, or a 3D mesh. At block 1006, the process 1000 poses the 3D asset using geometric information inferred from the scene. As such, the posed 3D asset conforms to one or more of perspective, orientation, or surface geometry of the photograph, including performing geometric transformations based on an inferred camera angle associated with the photograph.

At block 1008, the process 1000 adds a 3D element contextually associated with the scene. The 3D element may be selected and positioned in accordance with the contextual attributes. In some implementations, the process 1000 may further comprise occluding a portion of the posed 3D asset using segmentation masks or depth-ordering information determined from the scene such that a real-world object in the photograph visually appears in front of the posed 3D asset. At block 1010, the process 1000 generates an output photograph that comprises the posed 3D asset and the 3D elements integrated into the photograph.

In some examples, the process 1000 may further comprise determining one or more visual preferences for a first user based on images depicting the first user in a set of photographs associated with a first account of the first user. The process may then identify an image of the first user within the output photograph, where the output photograph is associated with a second account of a second user. After identifying the first user in the output photograph, the process may edit the user's image so that it conforms to the determined visual preferences. Editing the image of the user may include applying a generative in-painting technique configured to modify one or more of smoothing, tone, eye color, or lighting characteristics while preserving surrounding image content.

While the disclosed systems have been described in connection with the various examples of the various figures, it is to be understood that other similar implementations may be used or modifications and additions may be made to the described examples of the disclosed photo editing methods, among other things as disclosed herein. For example, one skilled in the art will recognize that the disclosed photo editing methods, among other things as disclosed herein in the instant application may apply to any environment, whether wired or wireless, and may be applied to any number of such devices connected via a communications network and interacting across the network. Therefore, the disclosed systems as described herein should not be limited to any single example, but rather should be construed in breadth and scope in accordance with the appended claims.

In describing preferred methods, systems, or apparatuses of the subject matter of the present disclosure - the disclosed photo editing methods - as illustrated in the Figures, specific terminology is employed for the sake of clarity. The claimed subject matter, however, is not intended to be limited to the specific terminology so selected.

The foregoing description of the examples has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the examples in terms of applications and symbolic representations of operations on information. These application descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as components, without loss of generality. The described operations and their associated components may be embodied in software, firmware, hardware, or any combinations thereof.

Any of the steps, operations, or processes described herein may be performed or implemented with one or more hardware or software components, alone or in combination with other devices. In one example, a software component is implemented with a computer program product comprising a computer-readable medium containing computer program code, which can be executed by a computer processor for performing any or all of the steps, operations, or processes described.

Examples also may relate to an apparatus for performing the operations herein. This apparatus may be specially constructed for the required purposes, and/or it may comprise a computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Examples also may relate to a product that is produced by a computing process described herein. Such a product may comprise information resulting from a computing process, where the information is stored on a non-transitory, tangible computer readable storage medium and may include any example of a computer program product or other data combination described herein.

Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims.

## Claims

1. A method for context-based insertion of a three-dimensional, 3D, object into a photograph, comprising:
analyzing, by a machine-learning model, a scene of the photograph to determine contextual attributes of the scene;
selecting, based on the contextual attributes, a 3D asset from a set of 3D assets;
posing the 3D asset using geometric information determined from the scene such that the posed 3D asset conforms to one or more of perspective, orientation, or surface geometry of the photograph;
adding a 3D element contextually associated with the scene, the 3D element being selected and positioned in accordance with the contextual attributes; and
generating an output photograph that comprises the posed 3D asset and the 3D elements integrated into the photograph.

2. The method of claim 1, wherein the contextual attributes comprise one or more of an environment type, a spatial layout, depth cues, object boundaries, and lighting characteristics.

3. The method of claim 1 or 2, further comprising:
occluding a portion of the posed 3D model using segmentation masks or depth-ordering information determined from the scene, such that a real-world object in the photograph visually appears in front of the posed 3D model.

4. The method of any preceding claim, further comprising:
determining one or more visual preferences of a first user in accordance with images depicting the user in a set of photographs associated with a first account of the first user;
identifying an image of the first user in the output photograph, the output photograph being associated with a second account of a second user; and
editing the image of the first user in the output photograph to conform to the one or more visual preferences.

5. The method of claim 4, wherein editing the image of the user comprises applying a generative in-painting technique to modify one or more of smoothing, tone, eye color, or lighting characteristics while preserving surrounding image content.

6. The method of any preceding claim, wherein analyzing the scene comprises generating a segmentation map of the photograph using a segmentation model to delineate object boundaries, foreground regions, or background regions.

7. The method of any preceding claim, wherein selecting the 3D asset comprises selecting an environment-specific variant of the 3D asset based on the contextual attributes.

8. The method of any preceding claim, wherein posing the 3D asset comprises performing a geometric transformation based on an inferred camera angle associated with the photograph.

9. The method of any preceding claim, wherein the 3D asset comprises one or more of a virtual character, an avatar, an animated figure, a synthetic entity, or a 3D mesh.

10. An apparatus for context-based insertion of a three-dimensional, 3D, object into a photograph, comprising:
one or more processors; and
one or more memories coupled with the one or more processors and storing processor-executable code that, when executed by the one or more processors, is configured to cause the apparatus to carry out the method of any preceding claim.

11. A computer-readable medium having program code recorded thereon for context-based insertion of a three-dimensional, 3D, object into a photograph, the program code when executed by one or more processors cause the one or more processors to carry out the method of any of claims 1 to 9.

12. A computer program product comprising instructions for context-based insertion of a three-dimensional, 3D, object into a photograph, the instructions when executed by one or more processors cause the one or more processors to carry out the method of any of claims 1 to 9.
